# FASCICULE DE BREVET EUROPEEN

(11) **EP 3 873 810 B1**
(45) Date de publication et mention de la délivrance du brevet: **19.10.2022**
(21) Numéro de dépôt: 19813092.4
(22) Date de dépôt: 22.10.2019
(51) Int. Cl.: B64D 41/00, B64D 27/24

(54) **SYSTEME DE CONVERSION ET DE TRANSPORT D'ENERGIE ELECTRIQUE POUR L'HYBRIDATION INTERNE D'UN AERONEF A TURBOREACTEURS**
SYSTEM ZUM UMWANDELN UND TRANSPORTIEREN VON ELEKTRISCHER ENERGIE FÜR DIE INTERNE HYBRIDISIERUNG EINES FLUGZEUGS MIT TURBOSTRAHLTRIEBWERKEN
SYSTEM FOR CONVERTING AND TRANSPORTING ELECTRICAL ENERGY FOR THE INTERNAL HYBRIDISATION OF AN AIRCRAFT WITH TURBOJET ENGINES

(30) Priorité: 31.10.2018 FR 1860071
(43) Date de publication de la demande: 08.09.2021
(73) Titulaire: SAFRAN, 75015 Paris (FR)
(72) Inventeur: SALANNE, Jean-Philippe, Hervé, 77550 MOISSY-CRAMAYEL (FR); PETIBON, Stéphane, 77550 MOISSY-CRAMAYEL (FR); ROUGIER, Florent, 77550 MOISSY-CRAMAYEL (FR); MEUNIER, René, 77550 MOISSY-CRAMAYEL (FR); ABDELLATIF, Meriem, 77550 MOISSY-CRAMAYEL (FR)
(74) Mandataire: Cabinet Beau de Loménie
(86) Numéro de dépôt international: PCT/FR2019/052518
(87) Numéro de publication internationale: WO 2020/089544

(56) Documents cités:
- EP-A1- 3 296 212
- EP-A1- 3 375 981

## Description

### Arrière-plan de l'invention

La présente invention se rapporte au domaine général des architectures propulsives plus électriques, plus particulièrement pour l'hybridation interne des propulseurs aéronefs.

La majorité des solutions propulsives de fortes puissances ont pour source une ou plusieurs turbines à gaz fournissant une puissance mécanique sur un arbre rotatif. En effet, au-delà d'un certain temps de vol ou d'une certaine puissance propulsive, les stockeurs électriques (batteries, piles à combustible ou supercapacités par exemple) n'ont pas des performances suffisantes pour être utilisés seuls et il convient donc à faire transiter la puissance mécanique d'un arbre à un ou plusieurs autres pour, en redimensionnant les propulseurs ou en assurant une assistance propulsive à partir de sources auxiliaires, obtenir un meilleur point de fonctionnement.

Le système de conversion et de transport d'énergie électrique dans un aéronef se présente typiquement selon deux types d'architectures :
- les architectures DC, les plus courantes, sont constituées de générateurs (la source électrique) équipés de redresseurs transformant l'intégralité de la puissance alternative en continue, laquelle est ensuite distribuée puis reconvertie en puissance AC par un onduleur pour alimenter les moteurs électriques et les différentes charges électriques. Une telle architecture permet un découplage complet des points de fonctionnement de la source et des charges et autorise une vitesse de rotation des arbres variable de -Ωmax à +Qmax.
- les architectures AC, moins représentées sauf pour des puissances supérieures au MW, sont constituées de génératrices couplées directement avec les moteurs électriques ou à des charges électriques. Une telle architecture permet un couplage fixe entre la vitesse de l'arbre moteur et celle des arbres des différentes charges et elle permet de fort rendement et une meilleure fiabilité car les convertisseurs de puissance ont été supprimés.

Pour l'hybridation interne des aéronefs à turboréacteurs, il n'existe que des solutions à architecture DC puisque la vitesse de rotation étant variable, une architecture AC n'est pas envisageable. Les publications EP3375981 A1 et EP3296212 A1 divulguent des solutions pour un système de conversion et de transport d'énergie électrique pour l'hybridation interne d'un aéronef à turboréacteurs.

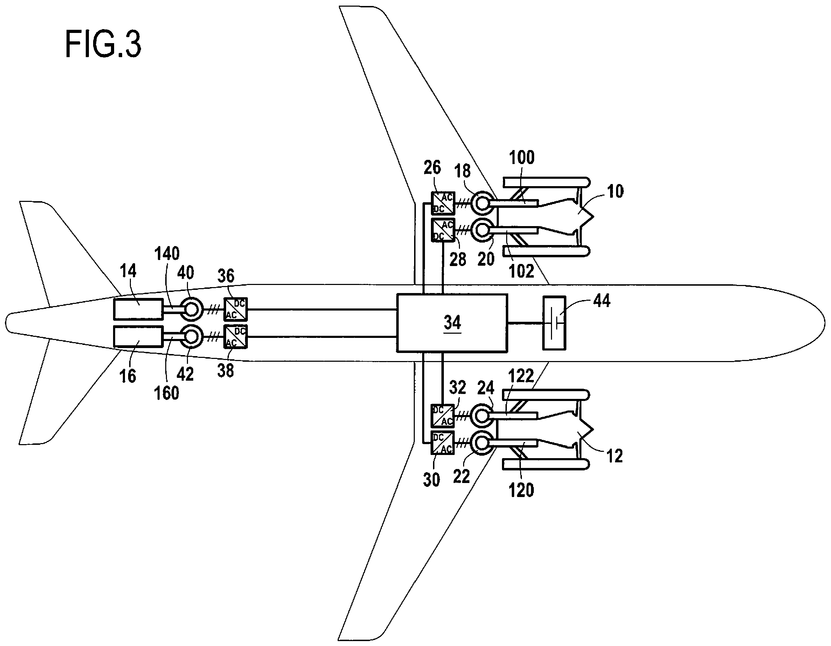

La figure 3 illustre une telle architecture connue dans le cadre d'un aéronef de type SMR (pour Short-Medium Range) propulsé par deux turboréacteurs 10, 12, une sous chaque aile, sur lesquelles on peut prélever ou injecter de la puissance via leur arbre de turbine haute pression HP et/ou basse pression BP. Deux turbines à gaz 14, 16 disposées en général à la pointe arrière de l'aéronef sont en outre disponibles pour assurer les transitoires de puissance. Dans cette architecture DC, chacun des arbres HP 100, 120 et BP 102, 122 des deux turboréacteurs est relié à une machine synchrone 18, 20, 22, 24, typiquement à aimant permanent (MSAP), délivrant une tension alternative triphasée pour un convertisseur statique AC/DC 26, 28, 30, 32 fournissant une tension continue (typiquement ±270V DC) sur le réseau de distribution DC 34. Deux onduleurs 36, 38 reliés à ce réseau transforment cette tension continue en une tension alternative triphasée alimentant deux machines synchrones 40, 42 en prises chacune avec un arbre de rotation 140, 160 des turbines à gaz 14, 16. Toutes les protections électriques de forte puissance (contacteurs et autres disjoncteurs non représentés) sont disposées sur le réseau de distribution DC. Un stockeur 44 peut en outre être monté directement en parallèle du réseau de distribution DC.

Une telle architecture présente toutefois de nombreux inconvénients : Le défaut de court-circuit interne dans les machines à aimant permanent doit être traité puisque considéré comme critique et implique nécessairement une redondance (donc un poids supplémentaire), la perte d'un convertisseur statique entraine la perte du générateur associé, ce qui rend difficile toute reconfiguration ou implique ici encore d'ajouter une redondance pour chaque type de convertisseur (donc encore un poids supplémentaire), la masse des protections est augmentée puisque réalisée en tension continue, et le rendement global de la chaine est réduit ( rendement d'environ 80%) du fait des multiples conversions effectuées tout au long de celle-ci.

### Objet et résumé de l'invention

La présente invention a donc pour but principal de pallier de tels inconvénients en proposant une nouvelle architecture particulièrement adaptée à l'hybridation interne des aéronefs.

Ces buts sont atteints par un système de conversion et de transport d'énergie électrique dans un aéronef propulsé par au moins un turboréacteur sur laquelle on peut prélever ou injecter de la puissance via un arbre de turbine haute pression et/ou basse pression et comportant au moins une turbine à gaz pour assurer des transitoires de puissance, caractérisé en ce que chacun desdits arbres de turbine haute pression et/ou basse pression est relié à une première machine asynchrone à double alimentation délivrant d'une part une première tension alternative triphasée sur un réseau de distribution AC et d'autre part une deuxième tension alternative polyphasée pour un premier convertisseur bidirectionnel AC/DC fournissant une tension continue sur un réseau de distribution DC, au moins un second convertisseur bidirectionnel DC/AC relié audit réseau de distribution DC transformant cette tension continue en une troisième tension alternative polyphasée alimentant au moins une seconde machine asynchrone à double alimentation en prise avec un arbre de rotation de ladite au moins une turbine à gaz, ladite seconde machine asynchrone à double alimentation délivrant en outre une quatrième tension alternative polyphasée sur ledit réseau de distribution AC.

Par le recours à une machine asynchrone à double alimentation, qui permet le transport de la puissance principale en AC et son contrôle en DC, c'est-à-dire une machine qui comporte deux voies d'alimentation ségréguées électriquement, on combine les avantages d'une architecture AC et d'une architecture DC. En outre, en utilisant un convertisseur bidirectionnel alimentant une partie de la machine asynchrone à double alimentation, on peut avoir des modes de fonctionnement à vitesse faiblement variable.

De préférence, le système comporte en outre un stockeur monté directement en parallèle sur ledit réseau de distribution DC.

Avantageusement, toutes les protections électriques de forte puissance (contacteurs et/ou disjoncteurs) sont disposées sur ledit réseau de distribution AC.

De préférence, ladite machine asynchrone à double alimentation est une génératrice à induction à rotor bobiné dont les enroulements du stator sont reliés directement audit réseau de distribution AC et les enroulements du rotor sont reliés audit convertisseur bidirectionnel AC/DC.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 montre un schéma de principe d'une architecture assurant une hybridation interne des aéronefs selon l'invention,
- la figure 2 est un organigramme illustrant la gestion des défauts dans l'architecture de la figure 1, et
- la figure 3 montre un schéma de principe d'une architecture assurant une hybridation interne des aéronefs selon l'état de l'art.

### Description détaillée de l'invention

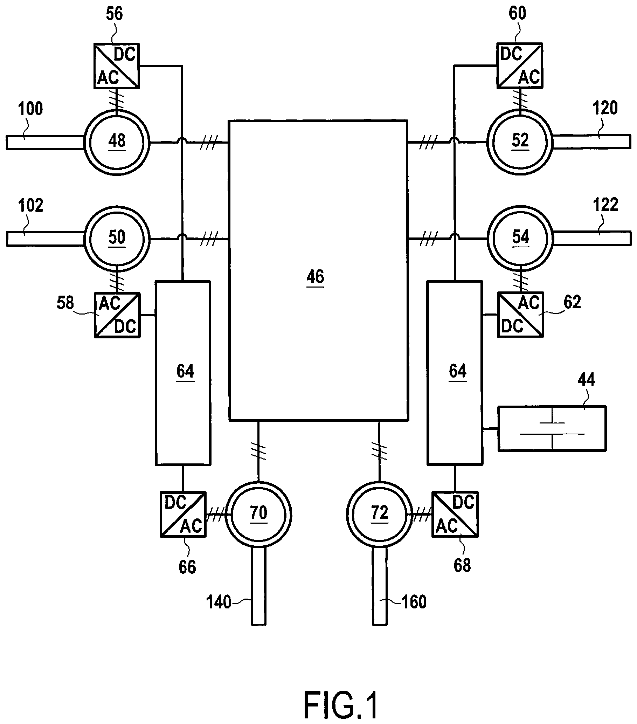

La figure 1 montre un système de conversion et de transport d'énergie électrique dans un aéronef conforme à l'invention dans lequel, à l'image d'une architecture AC, le transport de la puissance principale est assuré au travers d'un réseau de distribution AC 46.

La description qui suit est effectuée en regard d'un aéronef de type SMR semblable à celui illustré à la figure 3, c'est-à-dire propulsé par deux turboréacteurs sur lesquelles, selon les modes de fonctionnement mis en œuvre, on peut prélever ou injecter de la puissance via l'arbre haute pression 100, 120 et/ou basse pression 102, 122, l'aéronef comportant en outre deux turbines à gaz pour assurer des transitoires de puissance. Bien entendu, cette configuration d'aéronef ne saurait être limitative et l'invention est aussi applicable par exemple à un aéronef à turboréacteur unique ne comportant qu'une unique turbine à gaz ou à un aéronef à n turboréacteurs (avec n>2). De même, si dans la description suivante, les tensions AC sont triphasées elles peuvent bien entendu être aussi polyphasées (nombre de phases > 3).

Selon l'invention, chacun des arbres haute pression et/ou basse pression des deux turboréacteurs est relié à une première machine asynchrone à double alimentation 48, 50, 52, 54 délivrant d'une part une première tension alternative triphasée sur le réseau de distribution AC 46 et d'autre part une deuxième tension alternative triphasée pour des premiers convertisseurs bidirectionnels AC/DC 56, 58, 60, 62 fournissant une tension continue sur un réseau de distribution DC 64, des seconds convertisseurs bidirectionnels DC/AC 66, 68 reliés au réseau de distribution DC transformant cette tension continue en une troisième tension alternative triphasée alimentant des secondes machines asynchrones à double alimentation 70, 72 en prises avec les arbres de rotation 140, 160 des deux turbines à gaz, ces secondes machines asynchrones à double alimentation délivrant en outre une quatrième tension alternative triphasée sur le réseau de distribution AC 46. Le stockeur 44 est monté directement en parallèle sur le réseau de distribution DC 64.

Une machine à double alimentation présente la particularité par rapport à une machine asynchrone conventionnelle de posséder deux voies d'alimentations qui sont ségréguées électriquement. La ségrégation des deux alimentations de la MADA permet la non-propagation de défauts entre les deux voies et le fonctionnement en mode dégradé. En effet, si on perd la voie rotorique de la MADA, la machine peut continuer à fonctionner en mode dégradé en court-circuitant cette voie rotorique.

Un autre avantage apporté par la ségrégation électrique est la possibilité d'avoir deux niveaux de tension différents. Par exemple, la voie principale de la MADA qui voit passer la majeure partie de la puissance peut être à tension élevée alors que la voie rotorique qui voit passer moins de puissance peut être à tension plus faible. Ces tensions peuvent être adaptées au besoin, permettant d'optimiser le dimensionnement du système (notamment en masse).

La machine asynchrone à double alimentation (MADA) est une génératrice à induction à rotor bobiné dont les enroulements du stator sont reliés directement au réseau de distribution AC et les enroulements du rotor sont reliés à un convertisseur bidirectionnel AC/DC. Le convertisseur est réversible puisque la puissance rotorique transite dans un sens en fonctionnement hypersynchrone et dans le sens opposé en fonctionnement hyposynchrone. On notera qu'une telle machine asynchrone a la particularité de permettre de générer du couple mécanique sur l'arbre de sortie même si le champ magnétique ne tourne pas à la même vitesse que le rotor. Elle autorise en outre, au contraire des machines synchrones classiques où la vitesse de rotation du rotor est proportionnelle à la fréquence électrique au niveau du stator, un réglage de cette vitesse de rotation du rotor en fonction des fréquences électriques au niveau du stator et du rotor.

Plus particulièrement, en fonctionnement hypersynchrone, la génératrice tourne à une vitesse de rotation supérieure à la vitesse de synchronisme et le convertisseur fonctionnant alors en redresseur délivre une tension continue pour le réseau de distribution DC. De même, en fonctionnement hyposynchrone, la génératrice tourne à une vitesse de rotation inférieure à la vitesse de synchronisme et le convertisseur fonctionnant alors en onduleur délivre une tension alternative à la MADA depuis le réseau de distribution DC. L'onduleur règle l'amplitude et la fréquence du signal à envoyer au rotor faisant varier la vitesse et donc la puissance extraite de la MADA.

Avec la configuration du système de conversion selon l'invention, on a le même nombre de convertisseurs que dans une architecture DC de l'art antérieur, mais ces convertisseurs ne traitent qu'une partie de la puissance nominale transférée (de l'ordre de 25 à 30%), ce qui permet de choisir des convertisseurs plus légers, moins encombrants et moins couteux, alors que dans l'architecture DC les convertisseurs électriques sont dimensionnés pour faire passer la puissance nominale. Même si les MADA sont plus lourdes que les MSAP de l'architecture DC de l'art antérieur, l'ensemble est plus léger (de l'ordre de 5 à 10%) car les convertisseurs sont de bien moindre puissance. Egalement, toutes les protections électriques de forte puissance (contacteurs et/ou disjoncteurs) sont disposées sur le réseau de distribution AC et non sur le réseau de distribution DC, ce qui ici encore en réduit l'encombrement et le coût.

Par ailleurs, dans le cas de l'hybridation interne, on peut dissocier le réseau de distribution DC servant à faire de la variation de vitesse des arbres mécaniques du réseau de distribution AC sur lequel transite la majeure partie de la puissance, ce qui permet d'obtenir un meilleur rendement (de l'ordre de 2 à 5% supérieur) et, en assurant un isolement galvanique entre la puissance principale assurant la propulsion et son contrôle, simplifie les problématiques de ségrégation.

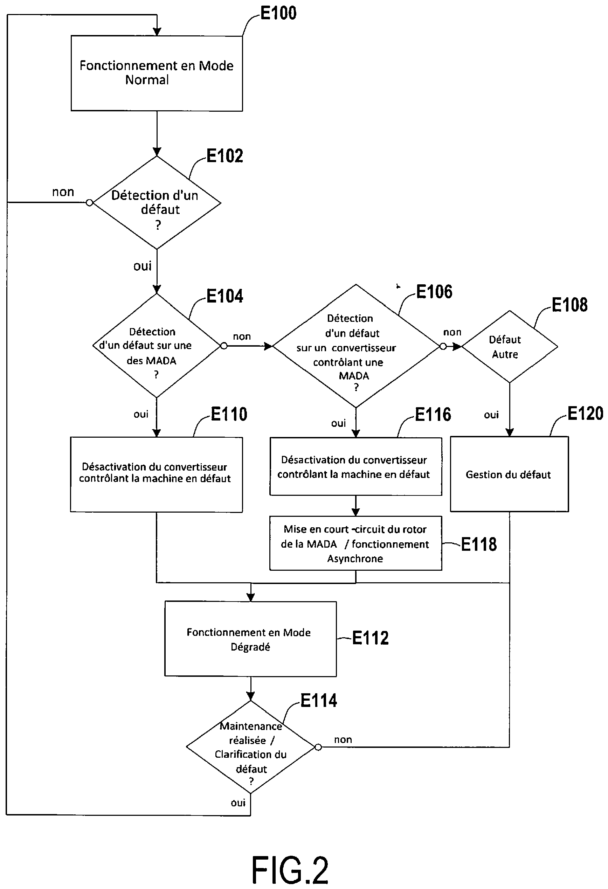

Enfin, avec l'invention, une panne d'un des convertisseurs dégrade le fonctionnement de la chaine entre sources et charges mais ne l'arrête pas comme l'illustre l'organigramme de la figure 2 qui décrit la gestion des défauts dans le système de conversion et de transport d'énergie électrique de l'invention. Soit la première étape E100 correspondant à un fonctionnement normal du système de l'invention, il est procédé dans une étape de test suivante E102 à la détection d'un défaut. En l'absence de défaut, il est fait retour à l'étape E100 mais si un défaut est détecté (réponse OUI au test de l'étape E102), il est procédé successivement dans les étapes E104, E106 et E108 à trois tests pour rechercher la nature de ce défaut, une réponse OUI au premier test de l'étape E104 signifiant que le défaut a été détecté sur une MADA, une réponse OUI au deuxième test de l'étape E106 signifiant que le défaut a été détecté sur un convertisseur contrôlant une MADA et une réponse OUI au troisième test de l'étape E108 signifiant que le défaut est d'une autre nature (par exemple la perte d'une phase ou une mauvaise qualité du réseau électrique). Si le défaut a été détecté sur une MADA, il est alors procédé dans une étape E110 à la désactivation du convertisseur contrôlant cette MADA (ce qui suffit à garantir la non propagation du défaut) amenant le système dans un mode de fonctionnement dégradé (étape E112) tant que le défaut n'est pas levé ou une maintenance corrective effectuée (étape E114). Si le défaut a été détecté sur un convertisseur contrôlant une MADA, il est alors procédé dans une étape suivante E116 à la désactivation du convertisseur concerné et la MADA est réduite à un fonctionnement asynchrone par mise en court-circuit de son rotor (étape E118) amenant une fois encore le système dans le mode de fonctionnement dégradé de l'étape E112 qui perdurera tant que le défaut ne sera pas lévé ou une maintenance corrective effectuée (étape E114). Si le défaut est autre, il est alors procédé dans une étape E120 au traitement de ce défaut amenant le système dans un mode de fonctionnement dégradé (étape E112) tant que le défaut n'est pas levé ou une maintenance corrective effectuée (étape E114). Quelle que soit la nature du défaut détecté, une fois ce défaut levé ou la maintenance corrective appropriée effectuée (étape E114), il peut alors être fait retour au mode de fonctionnement normal de l'étape initiale E100.

Ainsi, avec la présente invention, il est proposé une architecture optimisée pour l'hybridation interne qui permette de transférer de la puissance entre les arbres des turboréacteurs (propulseurs) et de faire de l'assistance propulsive à partir des turbines à gaz (sources auxiliaires). Le propulseur est la source primaire de puissance de l'aéronef et doit donc fournir l'énergie nécessaire aux systèmes non propulsifs de l'appareil. Il est toutefois avantageux de transférer de la puissance d'un arbre BP à un arbre HP ou inversement en fonction du transitoire considéré (les transitoires de point de fonctionnement du propulseur sont dimensionnant pour le turboréacteur). L'arbre BP du propulseur est ainsi utilisable pour faire du prélèvement et de l'assistance à la propulsion et la turbine à gaz, optimisée pour des faibles puissances, permet d'avoir un surcroit de puissance durant certaines phases de vol tout en procurant une meilleure densité d'énergie que des batteries.

## Revendications

1. Système de conversion et de transport d'énergie électrique dans un aéronef propulsé par au moins un turboréacteur (10, 12) sur laquelle on peut prélever ou injecter de la puissance via un arbre de turbine haute pression (100, 120) et/ou basse pression (102, 122) et comportant au moins une turbine à gaz (14, 16) pour assurer des transitoires de puissance, **caractérisé en ce que** chacun desdits arbres de turbine haute pression et/ou basse pression est relié à une première machine asynchrone à double alimentation (48, 50, 52, 54) délivrant d'une part une première tension alternative triphasée sur un réseau de distribution AC (46) et d'autre part une deuxième tension alternative polyphasée pour un premier convertisseur bidirectionnel AC/DC (56, 58, 60, 62) fournissant une tension continue sur un réseau de distribution DC (64), au moins un second convertisseur bidirectionnel DC/AC (66, 68) relié audit réseau de distribution DC transformant cette tension continue en une troisième tension alternative polyphasée alimentant au moins une seconde machine asynchrone à double alimentation (70, 72) en prise avec un arbre de rotation (140, 160) de ladite au moins une turbine à gaz (14, 16), ladite seconde machine asynchrone à double alimentation délivrant en outre une quatrième tension alternative polyphasée sur ledit réseau de distribution AC.

2. Système de conversion et de transport d'énergie électrique selon la revendication 1, **caractérisé en ce qu'**il comporte en outre un stockeur (44) monté directement en parallèle sur ledit réseau de distribution DC.

3. Système de conversion et de transport d'énergie électrique selon la revendication 1 ou la revendication 2, **caractérisé en ce que** toutes les protections électriques de forte puissance (contacteurs et/ou disjoncteurs) sont disposées sur ledit réseau de distribution AC.

4. Système de conversion et de transport d'énergie électrique selon l'une quelconque des revendications 1 à 3, **caractérisé en ce que** ladite machine asynchrone à double alimentation est une génératrice à induction à rotor bobiné dont les enroulements du stator sont reliés directement audit réseau de distribution AC et les enroulements du rotor sont reliés audit convertisseur bidirectionnel AC/DC.

5. Aéronef comportant un système de conversion et de transport d'énergie électrique selon quelconque des revendications 1 à 4.

6. Aéronef selon la revendication 5, de type SMR comportant deux turboréacteurs (10, 12) et deux turbines à gaz (14, 16).

7. Procédé de gestion des défauts dans un système de conversion et de transport d'énergie électrique selon l'une quelconque des revendications 1 à 4 comprenant les étapes suivantes de :
• Test de recherche d'un défaut (E102);
• Lorsqu'un défaut est détecté, recherche de la nature du défaut (E104, E106, E108);
• Lorsque le défaut concerne une MADA ou un contrôleur de MADA, désactivation du contrôleur de MADA (E110, E116).

## Patentansprüche

1. System zum Umwandeln und Transportieren von elektrischer Energie in einem Flugzeug, das von mindestens einem Turbostrahltriebwerk (10, 12) angetrieben wird, von dem über eine Hochdruck- (100, 120) und/oder Niederdruck-Turbinenwelle (102, 122) Leistung entnehmbar oder einleitbar ist und das mindestens eine Gasturbine (14, 16) umfasst, um Leistungstransienten sicherzustellen, **dadurch gekennzeichnet, dass** jede der Hochdruck- und/oder Niederdruck-Turbinenwellen mit einer ersten Asynchronmaschine mit doppelter Versorgung (48, 50, 52, 54) verbunden ist, die zum einen eine erste Dreiphasen-Wechselspannung über ein AC-Verteilernetz (46) und zum anderen eine zweite Mehrphasen-Wechselspannung für einen ersten bidirektionalen AC/DC-Wandler (56, 58, 60, 62) bereitstellt, der eine Gleichspannung über ein DC-Verteilernetz (64) bereitstellt, wobei mindestens ein zweiter bidirektionaler DC/AC-Wandler (66, 68), der mit dem DC-Verteilernetz verbunden ist, diese Gleichspannung in eine dritte Mehrphasen-Wechselspannung umwandelt, die mindestens eine zweite Asynchronmaschine mit doppelter Versorgung (70, 72) versorgt, die mit einer Rotationswelle (140, 160) der mindestens einen Gasturbine (14, 16) im Eingriff ist, wobei die zweite Asynchronmaschine mit doppelter Versorgung ferner eine vierte Mehrphasen-Wechselspannung über das AC-Verteilernetz bereitstellt.

2. System zum Umwandeln und Transportieren von elektrischer Energie nach Anspruch 1, **dadurch gekennzeichnet, dass** es ferner einen Speicher (44) aufweist, der direkt parallel auf dem DC-Verteilernetz angebracht ist.

3. System zum Umwandeln und Transportieren von elektrischer Energie nach Anspruch 1 oder Anspruch 2, **dadurch gekennzeichnet, dass** alle elektrischen Hochleistungs-Schutzvorrichtungen (Schalter und/oder Schutzschalter) auf dem AC-Verteilernetz angeordnet sind.

4. System zum Umwandeln und Transportieren von elektrischer Energie nach einem der Ansprüche 1 bis 3, **dadurch gekennzeichnet, dass** die Asynchronmaschine mit doppelter Versorgung ein Induktionsgenerator mit gewickeltem Rotor ist, dessen Wicklungen des Stators direkt mit dem AC-Verteilernetz verbunden sind und die Wicklungen des Rotors mit dem bidirektionalen AC/DC-Wandler verbunden sind.

5. Flugzeug, das ein System zum Umwandeln und Transportieren von elektrischer Energie nach einem der Ansprüche 1 bis 4 aufweist.

6. Flugzeug nach Anspruch 5 vom Typ SMR, das zwei Turbostrahltriebwerke (10, 12) und zwei Gasturbinen (14, 16) aufweist.

7. Verfahren zum Managen von Fehlern in einem System zum Umwandeln und Transportieren von elektrischer Energie nach einem der Ansprüche 1 bis 4, das die folgenden Schritte aufweist:
• Fehlersuchtest (E102);
• bei Ermittlung eines Fehlers, Suchen der Fehlerart (E104, E106, E108);
• wenn der Fehler eine MADA oder eine MADA-Steuerung betrifft, Deaktivierung der MADA-Steuerung (E110, E116).

## Claims

1. System for converting and transporting electrical energy in an aircraft propelled by at least one turbojet engine (10, 12) on which power can be bled or injected via a high-pressure (100, 120) and/or low-pressure (102, 122) turbine shaft and including at least one gas turbine (14, 16) to provide power transients, **characterized in that** each of said high-pressure and/or low-pressure turbine shafts is connected to a first doubly-fed asynchronous machine (48, 50, 52, 54) delivering, on the one hand, a first three-phase AC voltage over an AC distribution grid (46) and on the other hand a second polyphase AC voltage for a first AC/DC bidirectional converter (56, 58, 60, 62) supplying a DC voltage over a DC distribution grid (64), at least one second DC/AC bidirectional converter (66, 68) connected to said DC distribution grid converting this DC voltage into a third polyphase AC voltage supplying at least one second doubly-fed asynchronous machine (70, 72) engaged with a rotation shaft (140, 160) of said at least one gas turbine (14, 16), said second doubly-fed asynchronous machine further delivering a fourth polyphase AC voltage over said AC distribution grid.

2. System for converting and transporting electrical energy as claimed in claim 1, **characterized in that** it further includes a storage unit (44) shunt-mounted directly on said DC distribution grid.

3. System for converting and transporting electrical energy as claimed in claim 1 or claim 2, **characterized in that** all the high-power electrical protectors (contact switches and/or circuit breakers) are disposed on said AC distribution grid.

4. System for converting and transporting electrical energy as claimed in any one of claims 1 to 3, **characterized in that** said doubly-fed asynchronous machine (DFAM) is a wound rotor induction generator, the stator windings of which are directly connected to said AC distribution grid and the rotor windings of which are connected to said AC/DC bidirectional converter.

5. Aircraft including a system for converting and transporting electrical energy as claimed in any one of claims 1 to 4.

6. Aircraft as claimed in claim 5, of SMR type including two turbojet engines (10, 12) and two gas turbines (14, 16).

7. Method for managing faults in a system for converting and transporting electrical energy as claimed in any one of claims 1 to 4 comprising the following steps of:
• Performing a fault search test (E102);
• When a fault is detected, searching for the nature of the fault (E104, E106, E108);
• When the fault concerns a DFAM or a DFAM controller, disabling the DFAM controller (E110, E116).
